# EUROPEAN PATENT SPECIFICATION

(11) **EP 2 708 141 B1**
(45) Date of publication and mention of the grant of the patent: **11.04.2018**
(21) Application number: 13184417.7
(22) Date of filing: 13.09.2013
(51) Int. Cl.: A23G 9/12, A23G 9/28, A23G 9/30

(54) **Multi-purpose batch-freezer machine for preparation of ice-creams, confectionary cream and similar**
Mehrzweck-Speiseeisbereitermaschine zur Herstellung von Speiseeis, Konditoreicreme und dergleichen
Machine de congélation polyvalente pour préparer des crèmes glacées, crème de confiserie et similaires

(30) Priority: 14.09.2012 IT TV20120178
(43) Date of publication of application: 19.03.2014
(73) Proprietor: Valmar Global VSE ZA Sladoled D.O.O., 5293 Volcja Draga (SI)
(72) Inventor: JEJCIC, Valter, 5000 NOVA GORICA (SI)
(74) Representative: Bellemo, Matteo

(56) References cited:
- EP-A2- 2 067 407
- DE-U1-202009 015 645
- US-A- 2 322 168
- US-A- 5 494 194
- US-A1- 2010 175 390

## Description

The present invention relates to a multifunctional batch-freezer machine for producing ice-creams, confectionary creams and similar.

As known, since several years batch-freezer machines for producing ice-cream are available on the market, which are also capable of boiling/pasteurizing the milk that is used for producing ice-cream, and can therefore be used also for producing, in addition to traditional ice-cream, even confectionary creams and similar.

This type of machine for producing homemade ice-cream is usually provided with two processing tanks of a cylindrical shape, generally of equal capacity, which are arranged inside the machine one in a vertical position and the other in a horizontal position. The vertical axis processing tank is used for boiling/pasteurization of milk and possibly for boiling the confectionary cream, while the horizontal axis processing tank is used for the batch-freezing of the mixture of ingredients that will become the homemade ice-cream.

Such machines are described e.g. in DE 20 2009 015645 or EP 2 067 407. More in detail, the multi-functional machines described above are usually provided with an external boxlike casing of a substantially parallelepiped shape, and the vertical axis processing tank is arranged on the top of the boxlike casing. The horizontal axis processing tank is instead arranged on the front wall of the boxlike casing, immediately below the vertical tank axis, and is closed by a movable hatch that is hinged on the front wall so as to rotate about a vertical axis to and from a closing position in which it fluid-tight closes the opening of the horizontal processing tank.

Inside the boxlike casing, the multi-functional machines also have: a heating device that is capable of bringing and maintaining the vertical axis processing tank, and its contents, at a temperature comprised between +50°C and +100°C; a first heat pump cooling circuit, capable of taking and maintaining the vertical axis processing tank, and its contents, at a temperature between +2°C and +8°C; and a second heat pump cooling circuit, capable of taking and maintaining the horizontal axis processing tank, and its contents, at a batch freezing temperature between -10°C and -35°C.

In addition the multi-functional machines described above are also provided with two rotating mixing members which are each placed inside a respective processing tank, and are structured so as to rotate continuously within their own processing tank so as to blend/mix the contents inside the processing tank.

The multi-functional machines described above are finally provided with a drainage tap, which projects cantilevered from the front wall of the boxlike casing, horizontally staggered above the opening of the horizontal processing tank, communicating directly with the bottom of the vertical axis processing tank, and is finally structured so as to be able to discharge the contents of the vertical axis processing tank, within the ingredients loading hopper on the front closing hatch.

In the multi-functional machines currently on the market, the drainage tap is fixed directly on the outlet opening of the discharge duct of the vertical axis processing tank, by way of a threaded ring which is screwed directly on the body of the discharge duct. This solution enables to quickly detach/remove the tap from the drainage duct during the periodic cleaning of the machine.

To minimize the overall dimensions of appendices that project cantilevered from the front wall of the machine, in most of the multi-functional machines currently on the market, the drainage tap is also partially recessed within a recess specifically made on the front wall of the boxlike casing.

Unfortunately, this design feature complicates the operations of assembly and disassembly of the drainage tap, because the threaded ring is located on the bottom of the recess and is therefore more difficult to reach and unscrew by hand.

The purpose of this innovation is to simplify the operations of assembly and disassembly of the drainage tap on the front wall of the machine.

In agreement with these objectives, according to the present invention multifunctional batch-freezer machines for producing confectionary creams, ice-cream and similar are provided, as explained in claims 1 or 10 and preferably, but not necessarily, in any one of the dependent claims.

The present invention will now be described with reference to the accompanying drawings, which illustrate a non-limiting embodiment, wherein:
- Figure 1 is a perspective view of a batch-freezer machine for producing ice-cream, confectionary creams and similar, made according to the dictates of the present invention;
- Figure 2 is a side view of the upper part of the machine illustrated in figure 1 with parts in section and parts removed for clarity;
- Figure 3 is an enlargement of a portion of Figure 2, with parts in section and parts removed for clarity; while
- Figure 4 is a front view of the drainage outlet illustrated in Figure 3; while
- Figure 5 illustrates in a schematic way a part of the assembly procedure of the drainage outlet of Figure 3, with parts in section and parts removed for clarity.

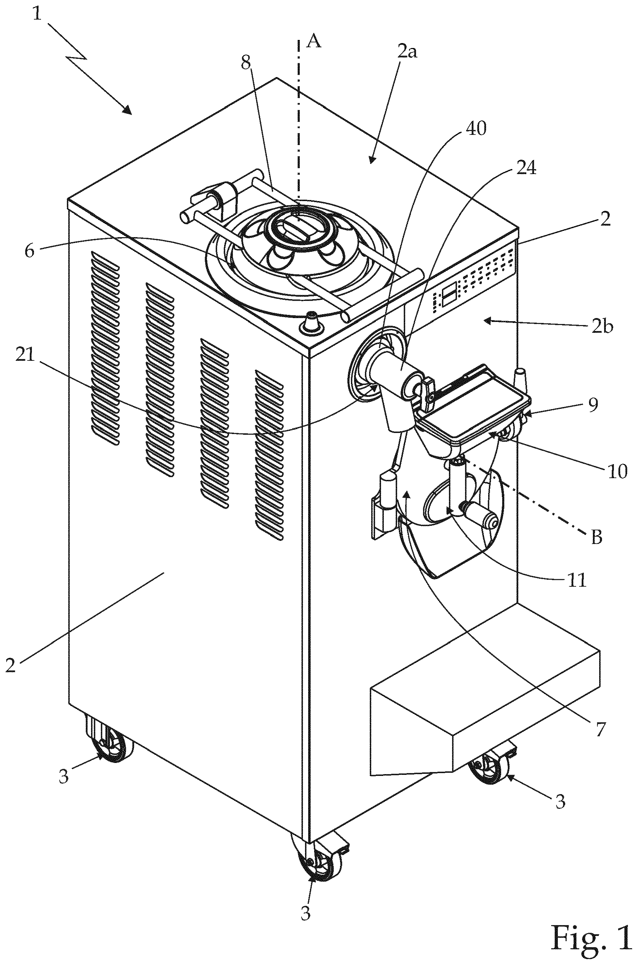

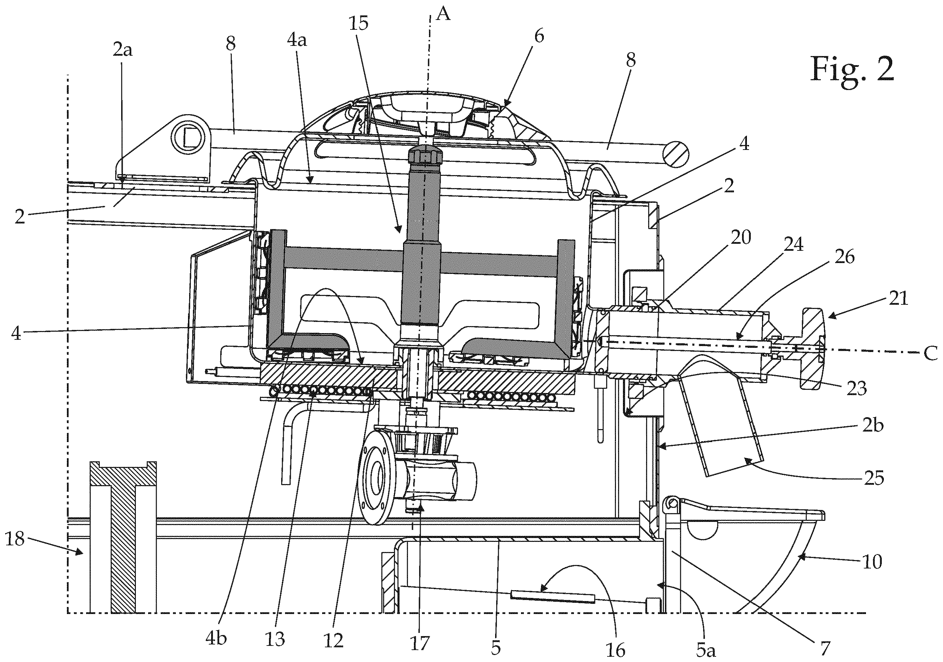

With reference to Figures 1 and 2, the number 1 indicates as a whole a batch-freezer machine for producing ice-cream, which is structured so as to also boil and/or pasteurize the milk that is used to produce the ice-cream, and can therefore be advantageously used also to produce confectionary creams and similar.

The batch-freezer machine 1 is provided with an external rigid boxlike casing 2 of preferably substantially parallelepiped shape, which is preferably, but not necessarily, provided with wheels resting on the ground 3, and further comprises:
- a vertical processing tank 4, which is substantially cylindrical in shape and extends inside the boxlike casing 2, starting from the upper wall 2a of the casing, while remaining locally coaxial with a reference axis A substantially vertical and locally substantially perpendicular to the upper wall 2a of the boxlike casing 2; and
- an horizontal processing tank 5, which is substantially cylindrical in shape and extends inside the boxlike casing 2, starting from the front or frontal wall 2b of the casing, while remaining locally coaxial with a substantially horizontal reference axis B and locally substantially perpendicular to the front or frontal wall 2b of the boxlike casing 2.

Preferably, but not necessarily, the horizontal processing tank 5 is also arranged below the vertical processing tank 4, horizontally offset with respect to the latter, so that the reference axes A and B are preferably arranged on opposite sides of the vertical centerline plane of the machine. The horizontal processing tank 5 also has a nominal capacity preferably greater than or equal to the nominal capacity of the vertical processing tank 4.

Milk pasteurization and the cooking/boiling of confectionary cream takes place inside the vertical processing tank 4, while the batch-freezing of the ice-cream takes place inside the horizontal processing tank 5.

The batch-freezer machine 1 is also provided with an upper lid 6 which is structured so as to be able to fluid-tight close the opening/inlet 4a of the vertical processing tank 4, and is mounted movably on the upper wall 2a of the boxlike casing 2 so as to be manually arranged in a closing position (see Figures 1 and 2) wherein the lid 6 completely closes/covers the opening 4a of the vertical processing tank 4; and a front hatch 7 that is structured so as to be able to fluid-tight close the opening/inlet 5a of the horizontal processing tank 5, and is mounted movable on the front wall 2b of the boxlike casing 2 so as to be manually arranged in a closing position (see Figures 1 and 2) wherein the hatch 7 fluid-tight closes the opening 5a of the horizontal processing tank 5.

More in detail, with reference to Figures 1 and 2, the upper lid 6 is preferably hinged on the upper wall 2a of the boxlike casing 2, beside the opening 4a of the vertical processing tank 4, so as to freely rotate about a horizontal reference axis, to and from a closing position wherein the lid 6 is arranged resting on the upper wall 2a of the casing 2 at the opening 4a, so as to completely cover the opening 4a of the vertical processing tank 4.

In the example illustrated, in particular, the upper lid 6 has a substantially spherical cap shape and is rigidly fixed on the central segment of a transverse support arm 8 extending substantially parallel to the upper wall 2a of the boxlike casing 2, astride the opening 4a of the vertical processing tank 4. The support arm 8 is structured so as to stably maintain the spherical cap shaped upper lid 6 in the inverted position above the opening 4a of the vertical processing tank 4, so as to be able to completely close/cover the opening 4a, and has one of the two ends hinged on the upper wall 2a of the boxlike casing 2 so as to pivot on the upper wall 2a to lift/push away the top lid 6 from the opening 4a of the vertical processing tank 4.

With reference to Figure 1, the front hatch 7 is instead preferably hinged on the front wall 2b of the boxlike casing 2, beside of the opening 5a of the horizontal processing tank 5, so as to freely rotate around a vertical reference axis, and from a closing position wherein the hatch 7 is in abutment on the front wall 2b of the boxlike casing 2 in correspondence of the opening 5a of the horizontal processing tank 5, so as to fluid-tight cover the opening 5a of the horizontal processing tank 5.

Preferably, the batch-freezer machine 1 is further provided also with a mechanical locking device 9 manually operated, which is arranged on the front wall 2b of the boxlike casing 2, beside the opening 5a of the horizontal processing tank 5, and is structured so as to engage and stably lock the hatch 7 in abutment on the front wall 2b, hermetically sealing the opening 5a of the horizontal processing tank 5.
With reference to Figures 1 and 2, the front hatch 7 is also provided with two tank-access passageways which extend in a pass-through way through the body of the hatch 7 preferably vertically staggered one above the other, and are structured/dimensioned so to allow, when the hatch 7 is in closing position, respectively, to pour inside the horizontal processing tank 5 the ingredients necessary for producing the ice-cream, and to extract the ice-cream from the horizontal processing tank 5 at the end of the batch-freezing process.

In the example illustrated, in particular, the top access passageway is preferably constituted by a vertical hopper 10 which crosses from one side to the other the upper portion of the hatch 7 so that the inlet opening of the hopper protrudes cantilevered from the outer face of the hatch 7, and that the outlet opening of the hopper is arranged on the inner face of the hatch 7, directly facing the opening 5a of the horizontal processing tank 5.

The lower access passageway instead is preferably constituted by a discharge outlet 11 with manual opening and closing, preferably with a guillotine closing member, which crosses from one side to the other the lower portion of the hatch 7, preferably near the lower edge of the same hatch 7.

With reference to Figure 2, the batch-freezer machine 1 further comprises:
- a heating device 12, electrically operated, in this case a resistor, which is preferably arranged near the bottom 4b of the vertical processing tank 4, outside the same tank, and is structured so as to bring and maintain the vertical processing tank 4 and its contents at a temperature exceeding +50°C and preferably between +60°C and +100°C;
- a lower heat pump cooling circuit (not visible in the figures), which is preferably arranged near to the cylindrical side wall of the horizontal processing tank 5, outside the same tank, and is structured so as to bring and maintain the horizontal processing tank 5, and its contents, at a batch freezing temperature lower than +0°C and preferably between - 10°C and -35°C, and preferably also
- an upper heat pump cooling circuit 13, which is preferably arranged near the bottom 4b of the vertical processing tank 4, outside the same tank, and is structured so as to bring and maintain the vertical processing tank 4, and its contents, at a temperature below +10°C and preferably between +2°C and +8°C.

The heating device 12 and the two heat pump cooling circuits are components already widely known in the field of batch-freezer machines for producing ice-cream and similar, and will therefore not be further described.

Again with reference to Figure 2, the batch-freezer machine 1 is also provided with two rotating mixing members 15 and 16 which are mounted in an axially rotatable manner inside, respectively, the vertical processing tank 4 and the horizontal processing tank 5, and with two electrically operated motorized driving assembly 17 and 18 each of which is structured so as to drive in rotation a respective rotating mixing member 15, 16.

More in detail, the mixing member, which is arranged inside the vertical processing tank 4, hereinafter indicated with number 15, extends coaxial to the longitudinal axis A of the processing tank 4, and is structured/shaped so as to blend/mix continuously the milk or confectionary cream contained inside the vertical processing tank 4 when it is driven into rotation around the longitudinal axis A of the tank.

The mixing member, which is arranged inside the horizontal processing tank 5, indicated below with number 16, instead extends coaxial to the longitudinal axis B of the processing tank 5, and is structured/shaped so as to be able to continuously blend/mix the semi-solid mixture that forms inside the horizontal processing tank 5 when it is driven into rotation around the longitudinal axis B of the tank. Preferably, the mixing member 16 is also structured so as to also continuously scrape the internal cylindrical lateral surface of the horizontal processing tank 5, so as to detach/remove the semi-solid mixture that adheres to the cylindrical side wall of the horizontal processing tank 5 due to the low temperature of the lateral wall of the tank.

Also the two rotating mixing members 15 and 16 and the related motorized drive assemblies 17 and 18 are components already widely known in the field of batch-freezer machines for producing homemade ice-cream, and will therefore not be further described.

With reference to Figures 1, 2, 3, 4 and 5, the batch-freezer machine 1 is finally provided with a drainage duct 20 substantially horizontal, which branches from the vertical processing tank 4 up to reach the front wall 2b of the boxlike casing 2 and then projects cantilevered with the end 20a from the front wall 2b, roughly above the opening 5a of the horizontal processing tank 5, and a manually operated tap 21, which is fixed in a rigid and stable, but easily removable way, in correspondence of the end 20a of the drainage duct 20, so as to project cantilevered from the front wall 2b of the boxlike casing 2 substantially over of the opening 5a of the horizontal processing tank 5, and is structured so as to regulate/control the outflow of the contents of the processing tank 4 along the vertical drainage duct 20.

In other words, the tap 21 is structured so that it can selectively discharge the contents of the vertical processing tank 4 inside the horizontal processing tank 5, through the ingredients loading hopper 10 that is present on the hatch 7.

In the example illustrated, in particular, the drainage duct 20 branches off from the vertical processing tank 4 preferably near the bottom 4b of the tank itself, and is preferably tilted a few degrees towards the front wall 2b of the boxlike casing 2, so as to facilitate the outflow of the pasteurized milk or confectionary cream from the processing tank 4. The free end 20a of the drainage duct 20 instead projects from the front wall 2b of the boxlike casing 2, preferably within a front recess 23 which is preferably, but not necessarily, made on the front wall 2b of the external casing 2 so as to be horizontally offset above the opening 5a of the horizontal processing tank 5.

In addition, with reference to Figures 2, 3, 4 and 5, the projecting end 20a of the drainage duct 20 has a substantially cylindrical tubular shape, and the manually operated tap 21 is structured so as to be fitted and then locked on the end 20a of the drainage duct 20 in a rigid and stable, but easily removable way, by means of a bayonet locking mechanism.

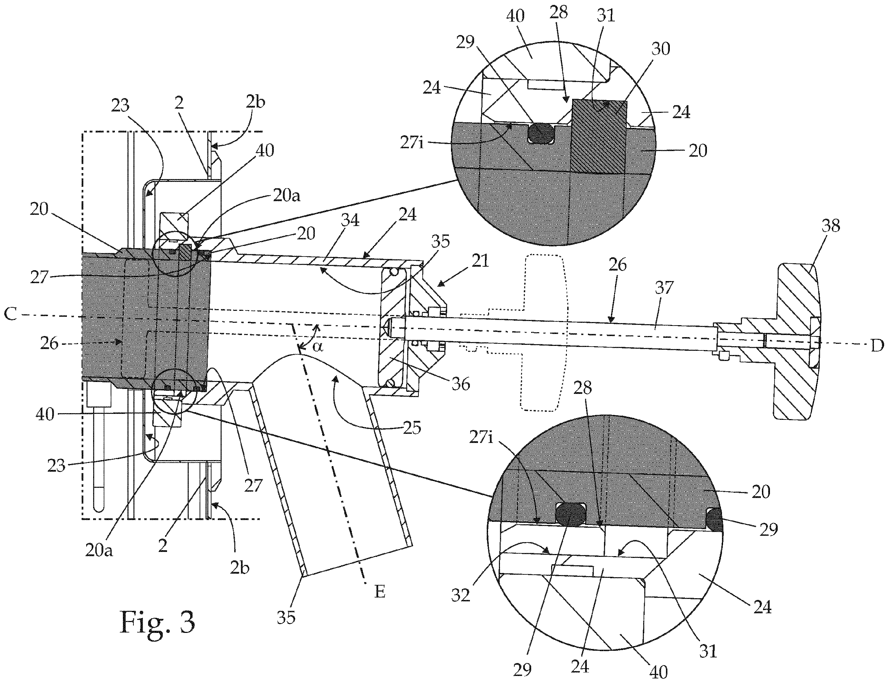

More in detail, the tap 21 is composed essentially of an external casing 24 which is provided with a central pass-through duct 25 dimensioned so as to be crossed by the pasteurized milk and the confectionary cream contained in the processing tank 4; and by a movable shutter 26 manually operated which is arranged within the central pass-through duct 25, and is movable between a closed position (see Figure 2) in which it prevents the outflow of any liquid through the central pass-through duct 25, and a maximum opening position (see figure 3) in which it allows the free outflow of any liquid through the central pass-through duct 25.

The external casing 24 moreover has, in correspondence of one of the two ends of the central pass-through duct 25, a coupling seat 27 of substantially cylindrical shape, which is structured/dimensioned so as to be fluid-tight engaged by the end 20a of the drainage duct 20, thus aligning the inlet of the central pass-through duct 25 to the opening of the drainage duct 20.

In other words, the external casing 24 of the tap 21 is adapted to be fitted/engaged on the protruding end 20a of the drainage duct 20 in correspondence of the coupling seat 27, aligning the longitudinal axis of the coupling seat 27 to the longitudinal axis C of the drainage duct 20.

The tap 21 is also provided with a bayonet locking mechanism 28 that is arranged within the coupling seat 27, and is structured so as to selectively rigidly lock the external casing 24 on the end 20a of the drainage duct 20.

In the example illustrated, in particular, the projecting end 20a of the drainage duct 20 is preferably externally provided with one or more annular seals 29, suitably spaced one from the other.

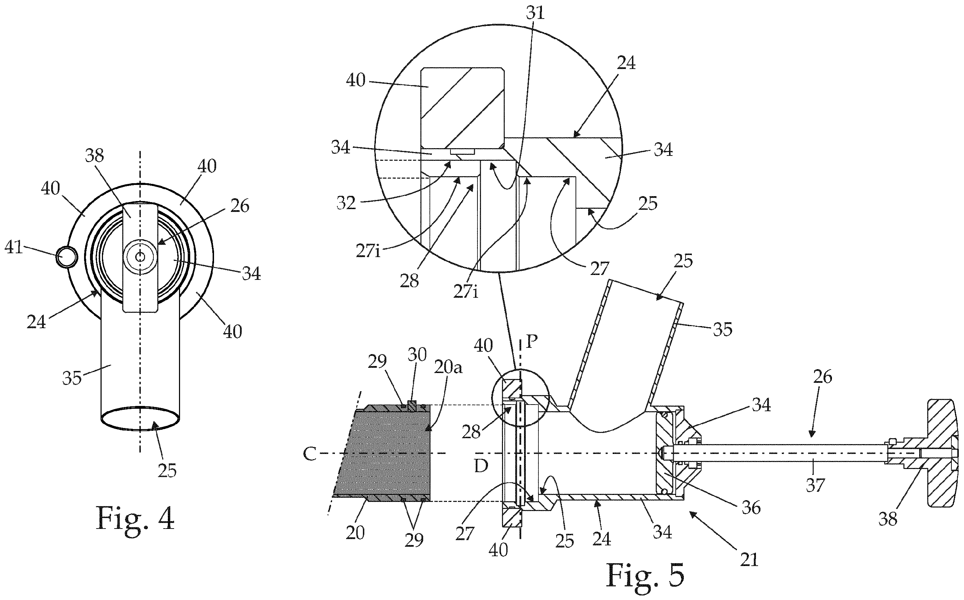

With reference to Figures 3 and 5, the bayonet locking mechanism 28 instead preferably comprises: a projecting pin 30 which, in the vicinity of the opening of the drainage duct 20 and preferably also upstream of at least one of the annular sealing gasket 29 placed on the end 20a of the drainage duct 20, cantilevered extends from the cylindrical lateral wall of the end 20a of the drainage duct 20 preferably in an outgoing radial direction; an annular transversal groove 31 that is formed on the internal cylindrical surface 27i of the coupling seat 27, so as to lie on a reference plane P locally substantially perpendicular to the longitudinal axis of the coupling seat 27 (i.e. locally orthogonal to the axis C of the drainage duct 20), and is shaped/dimensioned so to be slidingly engaged by the projecting pin 30; and finally a longitudinal groove 33 extending from the peripheral edge of the coupling seat 27 up to the transversal groove 31, while remaining locally substantially parallel to the longitudinal axis of the coupling seat 27 (i.e .locally parallel to the axis C of the drainage duct 20), and is shaped/dimensioned so as to be slidingly engaged by the projecting pin 30.

In the example illustrated, in particular, the external casing 24 of the tap 21 is preferably composed of a bell-shaped body 34 of substantially cylindrical shape, extending coaxially to an axis D and incorporating the coupling seat 27 in correspondence of its opening, so as to be able to be fluid-tight fitted on the free end 20a of the drainage duct 20 while remaining locally substantially coaxial to the longitudinal axis C of the drainage duct 20, and by a transverse tubular sleeve 35 preferably substantially cylindrical in shape that extends/branches outwards from the side wall of the bell-shaped body 34 while remaining locally coaxial with a reference axis and that appears to be inclined with respect to the longitudinal axis D of the bell-shaped body 34 by an angle α preferably, but not necessarily, between 10° and 80°.

With reference to Figures 3 and 5, instead the movable shutter 26 of the tap 21 preferably comprises: a piston 36 that is inserted in a fluid-tight manner within the rectilinear cavity of the bell-shaped body 34, with the ability to move within said rectilinear cavity parallel to the longitudinal axis D of the bell-shaped body 34; and a control rod 37 manually operated, extending coaxial or however parallel to the axis D of the bell-shaped body 34, has one end fixed to the piston 36, and finally engages in a pass-through and axially sliding way the cover of the bell-shaped body 34, so as to protrude cantilevered outside the bell-shaped body 34. The second end of the control rod 37 is preferably provided instead of an handle or knob 38 shaped so as to facilitate the grip and the axial displacement of the control rod 7 by the user.

The control rod 37 is also dimensioned so as to be manually movable by the user between a retracted position (see Figure 2) in which the control rod 37 is almost entirely contained within the bell-shaped body 34, so as to arrange the piston 36 upstream of the opening of the transverse tubular sleeve 35 to prevent the milk or the confectionary cream to flow/leak out from the opening of the drainage duct 20; and an extracted position (see figure 3 and 5) in which the control rod 37 is almost entirely contained within the bell-shaped body 34, so as to have the piston 36 downstream of the opening of the transverse tubular sleeve 35 so as to allow the milk or the confectionary creamto flow/leak out freely from the drainage duct 20.

With reference to Figures 2, 3, 4 and 5, the batch-freezer machine 1 is finally preferably also provided with a detecting device (not illustrated) which is structured so as to be able to determine when the tap 21 is fixed/fitted on the projecting end 20a of the drainage duct 20.

In the example illustrated, in particular, the tap 21 is preferably also provided with an outer nut ring 40 which is fitted in an axially rotatable manner on the external casing 24 in correspondence of the coupling seat 27 (i.e. at the opening of the bell-shaped body 34), so as to enclose and be locally substantially coaxial to the coupling seat 27 (i.e., coaxial to the longitudinal axis D of the bell-shaped body 34); and a longitudinal pin 41 extending cantilevered from the nut ring 40 in an eccentric position and parallel to the longitudinal axis of the coupling seat 27 (i.e. parallel to the longitudinal axis D of the bell-shaped body 34), and is dimensioned so as to be able to engage in a control opening or cavity (not shown) specifically made on the front wall 2b of the boxlike casing 2, or better on the bottom of the recess 23 that is present on the front wall 2b of the external casing 2, beside the end 20a of the drainage duct 20. According to claim 1, the device for detecting the presence of the tap comprises a micro-switch or other position sensor, being arranged within the control opening or cavity that flanks the projecting end 20a of the drainage duct 20, and is structured so as to activate when the longitudinal pin 41 engages/penetrates inside said control opening or cavity. According to claim 10, the external casing 24 of the tap 21 can be provided with a series of permanent magnets appropriately distributed around the coupling seat 27, while the device for detecting the presence of the tap comprises one or more presence sensors, which are structured so as to be activated when invested by the magnetic field generated by the permanent magnets placed on the external casing 24, and are arranged on the front wall 2b of the external casing 2, or better on the bottom of the recess 23 that is on the front wall 2b of the external casing 2, so as to flank the projecting end 20a of the drainage duct 20.

The general operation of the multi-purpose batch-freezer machine 1 is easily deducible from what described above, and requires no further explanation.

The mounting of the tap 21 manually operated instead envisages the steps of:
- positioning the external casing 24 opposite the end 20a of the drainage duct 20, with the coupling seat 27 arranged facing and coaxial to said end 20a of the drainage duct 20;
- rotating the external casing 24 around the longitudinal axis C of the drainage duct 20 so as to align the longitudinal groove 33 to the projecting pin 30 that is present on the cylindrical side wall of the drainage duct 20, if present, also aligning the longitudinal pin 41 to corresponding control opening or cavity that is on the front wall 2b of the external casing 2;
- engaging the external casing 24 on the end 20a of the drainage duct 20, up to bring the projecting pin 30 within the transversal groove 31, and possibly also the longitudinal pin 41 within the corresponding control opening or cavity on the front wall 2b of the outer casing 2; and finally
- rotating the external casing 24 on the end 20a of the drainage duct 20, to move the projecting pin 30 within the transverse groove 31 and distancing/ misaligning it from the longitudinal groove 33.

The advantages deriving from the particular structure of the multi-purpose batch-freezer machine 1 and its tap 21 are obvious. The user can remove the tap 21 from the front wall 2b of the boxlike casing 2 extremely quickly, without having to insert his hand inside the recess 23 that is present on the front wall 2b of the boxlike casing 2.

Furthermore, the particular shape of the tap 21 allows the use of the drainage ducts 20 with passage section much greater than those currently in use, thus facilitating the operations of periodical cleaning of the batch-freezer machine 1.

Finally it is clear that the multi-purpose batch-freezer machine 1 described above can be modified and varied. For example, instead of being annular, the transversal groove 31 of the bayonet locking mechanism 28 may have the shape of a circular sector, which always lies on a reference plane locally orthogonal to the longitudinal axis of the coupling seat 27 (i.e. locally orthogonal to the longitudinal axis C of the drainage duct 20), and is dimensioned so as to enable the external casing 24 of the tap 21 to rotate freely on the free end 20a of the drainage duct 20 and around the longitudinal axis C of the duct, of an angle preferably greater than or equal to 10°, so as to remove/misalign the projecting pin 30 from the longitudinal groove 33.

## Claims

1. Multi-purpose batch-freezer machine for preparation of ice creams, confectionary creams and similar provided with an outer boxlike casing (2) and also comprising:
- a vertical processing tank (4) which is substantially cylindrical in shape and extends inside the boxlike casing (2), starting from the upper wall (2a) of the casing;
- a horizontal processing tank (5) which is substantially cylindrical in shape and extends inside the boxlike casing (2), starting from the front wall (2b) of the casing;
- a drainage duct (20) that branches from the vertical processing tank (4) up to reaching the front wall (2b) of the boxlike casing (2) and then projects cantilevered with the end (20a) from the front wall (2b), roughly above the opening (5a) of the horizontal processing tank (5); and
- a manually operated tap (21) that is fixed to said end (20a) of the drainage duct (20), so as to projects cantilevered from the front wall (2b) of the boxlike casing (2);
the multi-purpose batch-freezer machine **being characterized in that** the end (20a) of the drainage duct (20) has a substantially cylindrical tubular shape, and the manually operated tap (21) is structured so as to be fitted and then locked on said end (20a) of the drainage duct (20) in a rigid and stable, though easily removable, manner by means of a bayonet locking mechanism; **in that** the tap (21) comprises: an external casing (24) which is provided with a central pass-through duct (25) and moreover has, at one of the two ends of said central pass-through duct (25), a substantially cylindrical shaped coupling seat (27) which is structured so as to be engaged in a fluid-tight manner by the end (20a) of said drainage duct (20); an outer ring nut (40) which is fitted in an axially rotatable manner on the external casing (24), at the coupling seat (27), so as to enclose and be locally substantially coaxial to said coupling seat (27); and a longitudinal pin (41) which projects cantilevered from the ring nut (40) in an eccentric position and parallel to the longitudinal axis (D) of the coupling seat (27), and is dimensioned so as to be insertable in a control opening or cavity specifically obtained on the front wall (2b) of the boxlike casing (2), at the side of the end (20a) of said draining duct (20); **and in that** it additionally comprises a detecting device which is adapted to determine when said tap (21) is fixed/fitted to the end (20a) of said drainage duct (20), and comprises a micro-switch or other position sensor which is arranged within the control opening or cavity and is structured so as to activate when the longitudinal pin (41) engages/penetrates inside said control opening or cavity.

2. Multi-purpose batch-freezer machine according to Claim 1, **characterized in that** the tap (21) comprises: a manually operated moving shutter (26) which is located inside the central pass-through duct (25) and is movable between a closed position in which it prevents the outflow of any liquid through the central pass-through duct (25), and a wide opening position in which it enables free outflow of any liquid through the central pass-through duct (25); and a bayonet locking mechanism (28) which is arranged inside the coupling seat (27), and is structured so as to selectively lock in a rigid manner the external casing (24) on the end (20a) of the drainage duct (20).

3. Multi-purpose batch-freezer machine according to Claim 2, **characterized in that** the bayonet locking mechanism (28) comprises: a projecting pin (30) that projects cantilevered from the lateral wall of the end (2a) of the drainage duct (20); a transversal groove (31) which is obtained on the internal cylindrical surface (27i) of the coupling seat (27), so as to rest on a reference plane (P) locally substantially orthogonal to the longitudinal axis (D) of the coupling seat (27), and is shaped/dimensioned so as to be slidingly engaged by the projecting pin (30); and a longitudinal groove (33) which extends from the peripheral edge of the coupling seat (27) to the transversal groove (31) while remaining locally substantially parallel to the longitudinal axis (D) of the coupling seat (27), and is shaped/dimensioned so as to be slidingly engaged by the projecting pin (30).

4. Multi-purpose batch-freezer machine according to Claim 2 or 3, **characterized in that** the external casing (24) of the tap comprises a substantially cylindrical bell-shaped body (34) which incorporates said coupling seat (27) at its own opening, so as to be fitted in a fluid-tight manner on the end (20a) of the drainage duct (20) while remaining locally substantially coaxial to the longitudinal axis (C) of the drainage duct (20); and a transversal tubular sleeve (35) that extends/branches outwards from the lateral wall of the bell-shaped body (34).

5. Multi-purpose batch-freezer machine according to Claim 4, **characterized in that** the movable shutter (26) of the tap (21) comprises a piston (36) inserted in a fluid-tight manner inside the rectilinear cavity of the bell-shaped body (34) with the possibility of moving inside said rectilinear cavity parallel to the longitudinal axis (D) of the bell-shaped body (34), and a manually operated control rod (37) which extends parallel to the longitudinal axis (D) of the bell-shaped body (34), has one end integral with said piston (36), and finally engages in a pass-through and axially sliding manner the end cap of the bell-shaped body (34), so as to project cantilevered outside the bell-shaped body (34); the control rod (37) being manually movable between a retracted position in which the command rod (37) is almost entirely enclosed inside the bell-shaped body (34), so as to arrange the piston (36) upstream of the opening of the transversal tubular sleeve (35), and an extracted position in which the command rod (37) is almost entirely contained outside the bell-shaped body (34), so as to arrange the piston (36) downstream of the opening of transverse tubular sleeve (35).

6. Multi-purpose batch-freezer machine according to any one of the preceding claims, **characterized by** also comprising an upper lid (6) which is structured so as to be able to close the opening (4a) of the vertical processing tank (4) in a fluid-tight manner, and is mounted movably on the upper wall (2a) of the boxlike casing (2) so as to be manually positionable in a closed position in which said lid (6) closes/covers the opening (4a) of the vertical processing tank (4).

7. Multi-purpose batch-freezer machine according to any one of the preceding claims, **characterized by** also comprising a front hatch (7) which is structured so as to be able to close the opening (5a) of the horizontal processing tank (5) in a fluid-tight manner, and is mounted movably on the front wall (2b) of the boxlike casing (2) so as to be manually positionable in a closed position in which said hatch (7) closes the opening (5a) of the horizontal processing tank (5) in a fluid-tight manner.

8. Multi-purpose batch-freezer machine according to any one of the preceding claims, **characterized by** also comprising a heating device (12) structured so as to bring and maintain the vertical processing tank (4) and its contents at a temperature above +50°C; and an upper cooling circuit (13) which is structured so as to bring and maintain the vertical processing tank (4) and its contents at a temperature below +10°C.

9. Multi-purpose batch-freezer machine according to any one of the preceding claims, **characterized by** also comprising a lower cooling circuit structured so as to bring and maintain the horizontal processing tank (5) and its contents at a batch temperature below +0°C.

10. Multi-purpose batch-freezer machine for preparation of ice creams, confectionary creams and similar provided with an outer boxlike casing (2) and also comprising:
- a vertical processing tank (4) which is substantially cylindrical in shape and extends inside the boxlike casing (2), starting from the upper wall (2a) of the casing;
- a horizontal processing tank (5) which is substantially cylindrical in shape and extends inside the boxlike casing (2), starting from the front wall (2b) of the casing;
- a drainage duct (20) that branches from the vertical processing tank (4) up to reaching the front wall (2b) of the boxlike casing (2) and then projects cantilevered with the end (20a) from the front wall (2b), roughly above the opening (5a) of the horizontal processing tank (5); and
- a manually operated tap (21) that is fixed to said end (20a) of the drainage duct (20), so as to projects cantilevered from the front wall (2b) of the boxlike casing (2);
the multi-purpose batch-freezer machine **being characterized in that** the end (20a) of the drainage duct (20) has a substantially cylindrical tubular shape, and the manually operated tap (21) is structured so as to be fitted and then locked on said end (20a) of the drainage duct (20) in a rigid and stable, though easily removable, manner by means of a bayonet locking mechanism; **in that** the tap (21) comprises: an external casing (24) which is provided with a central pass-through duct (25) and moreover has, at one of the two ends of said central pass-through duct (25), a substantially cylindrical shaped coupling seat (27) which is structured so as to be engaged in a fluid-tight manner by the end (20a) of said drainage duct (20); and a series of permanent magnets appropriately distributed on the external casing (24), around the coupling seat (27); **and in that** it additionally comprises a detecting device which is structured so as to be able to determine when said tap (21) is fixed/fitted to the end (20a) of said drainage duct (20), and which includes one or more presence sensors that are arranged on the front wall (2b) of the boxlike casing (2) so as to flank the end (20a) of said drainage duct (20), and are structured so as to be activated when invested by the magnetic field generated by the permanent magnets located on the external casing (24) of the tap (21).

11. Multi-purpose batch-freezer machine according to claim 10, **characterized in that** the tap (21) comprises: a manually operated moving shutter (26) which is located inside the central pass-through duct (25) and is movable between a closed position in which it prevents the outflow of any liquid through the central pass-through duct (25), and a wide opening position in which it enables free outflow of any liquid through the central pass-through duct (25); and a bayonet locking mechanism (28) which is arranged inside the coupling seat (27), and is structured so as to selectively lock in a rigid manner the external casing (24) of the tap (21) on the end (20a) of the drainage duct (20).

12. Multi-purpose batch-freezer machine according to claim 11, **characterized in that** the bayonet locking mechanism (28) comprises: a projecting pin (30) that projects cantilevered from the lateral wall of the end (2a) of the drainage duct (20); a transversal groove (31) which is obtained on the internal cylindrical surface (27i) of the coupling seat (27), so as to rest on a reference plane (P) locally substantially orthogonal to the longitudinal axis (D) of the coupling seat (27), and is shaped/dimensioned so as to be slidingly engaged by the projecting pin (30); and a longitudinal groove (33) which extends from the peripheral edge of the coupling seat (27) to the transversal groove (31) while remaining locally substantially parallel to the longitudinal axis (D) of the coupling seat (27), and is shaped/dimensioned so as to be slidingly engaged by the projecting pin (30).

13. Multi-purpose batch-freezer machine according to claim 11 or 12, **characterized in that** the external casing (24) of the tap comprises a substantially cylindrical bell-shaped body (34) which incorporates said coupling seat (27) at its own opening, so as to be fitted in a fluid-tight manner on the end (20a) of the drainage duct (20) while remaining locally substantially coaxial to the longitudinal axis (C) of the drainage duct (20); and a transversal tubular sleeve (35) that extends/branches outwards from the lateral wall of the bell-shaped body (34).

14. Multi-purpose batch-freezer machine according to claim 13, **characterized in that** the movable shutter (26) of the tap (21) comprises a piston (36) inserted in a fluid-tight manner inside the rectilinear cavity of the bell-shaped body (34) with the possibility of moving inside said rectilinear cavity parallel to the longitudinal axis (D) of the bell-shaped body (34), and a manually operated control rod (37) which extends parallel to the longitudinal axis (D) of the bell-shaped body (34), has one end integral with said piston (36), and finally engages in a pass-through and axially sliding manner the end cap of the bell-shaped body (34), so as to project cantilevered outside the bell-shaped body (34); the control rod (37) being manually movable between a retracted position in which the command rod (37) is almost entirely enclosed inside the bell-shaped body (34), so as to arrange the piston (36) upstream of the opening of the transversal tubular sleeve (35), and an extracted position in which the command rod (37) is almost entirely contained outside the bell-shaped body (34), so as to arrange the piston (36) downstream of the opening of transverse tubular sleeve (35).

15. Multi-purpose batch-freezer machine according to any one of claims 10 to 14, **characterized in that** the tap (21) also comprises an outer ring nut (40) which is fitted in an axially rotatable manner on the external casing (24), at the coupling seat (27), so as to enclose and be locally substantially coaxial to said coupling seat (27); and a longitudinal pin (41) that projects cantilevered from the ring nut (40) in an eccentric position and parallel to the longitudinal axis (D) of the coupling seat (27).

16. Multi-purpose batch-freezer machine according to claim 15, **characterized in that** said longitudinal pin (41) is dimensioned so as to be insertable in a control opening or cavity specifically obtained on the front wall (2b) of the boxlike casing (2), at the side of the end (20a) of said draining duct (20).

17. Multi-purpose batch-freezer machine according to any one of claims 10 to 16, **characterized by** also comprising an upper lid (6) which is structured so as to be able to close the opening (4a) of the vertical processing tank (4) in a fluid-tight manner, and is mounted movably on the upper wall (2a) of the boxlike casing (2) so as to be manually positionable in a closed position in which said lid (6) closes/covers the opening (4a) of the vertical processing tank (4).

18. Multi-purpose batch-freezer machine according to any one of claims 10 to 17, **characterized by** also comprising a front hatch (7) which is structured so as to be able to close the opening (5a) of the horizontal processing tank (5) in a fluid-tight manner, and is mounted movably on the front wall (2b) of the boxlike casing (2) so as to be manually positionable in a closed position in which said hatch (7) closes the opening (5a) of the horizontal processing tank (5) in a fluid-tight manner.

19. Multi-purpose batch-freezer machine according to any one of claim 10 to 18, **characterized by** also comprising a heating device (12) structured so as to bring and maintain the vertical processing tank (4) and its contents at a temperature above +50°C; and an upper cooling circuit (13) which is structured so as to bring and maintain the vertical processing tank (4) and its contents at a temperature below +10°C.

20. Multi-purpose batch-freezer machine according to any one of claims 10 to 19, **characterized by** also comprising a lower cooling circuit structured so as to bring and maintain the horizontal processing tank (5) and its contents at a batch temperature below +0°C.

## Patentansprüche

1. Mehrzweck-Chargen-Gefriermaschine für die Zubereitung von Speiseeis, Konditoreicremes und dergleichen, die mit einem äußeren, kastenförmigen Gehäuse (2) versehen ist und auch Folgendes umfasst:
- einen vertikalen Verarbeitungsbehälter (4), der im Wesentlichen zylindrisch geformt ist und sich innerhalb des kastenförmigen Gehäuses (2) erstreckt, ausgehend von der oberen Wand (2a) des Gehäuses;
- einen horizontalen, im Wesentlichen zylindrischen Verarbeitungsbehälter (5), der sich innerhalb des kastenförmigen Gehäuses (2) erstreckt, ausgehend von der Stirnwand (2b) des Gehäuses;
- einen Drainagekanal (20), der von dem vertikalen Verarbeitungsbehälter (4) bis zum Erreichen der Stirnwand (2b) des kastenförmigen Gehäuses (2) abzweigt und der dann mit dem Ende (20a) von der Stirnwand (2b) aus auskragend etwa über die Öffnung (5a) des horizontalen Verarbeitungsbehälters (5) hinausragt; und
- einen handbetätigten Hahn (21), der am genannten Ende (20a) des Drainagekanals (20) befestigt ist, sodass er von der Stirnwand (2b) des kastenförmigen Gehäuses (2) auskragend vorsteht;
**dadurch gekennzeichnet, dass** das Ende (20a) des Drainagekanals (20) eine im Wesentlichen zylindrische Rohrform aufweist, und dass der handbetätigte Hahn (21) so strukturiert ist, dass er am genannten Ende (20a) des Drainagekanals (20) in einer starren und stabilen, wenn auch leicht entfernbaren Weise mittels eines Bajonettverschlussmechanismus angebracht und dann verriegelt wird; dass der Hahn (21) Folgendes umfasst:
ein externes Gehäuse (24), das mit einem zentralen Durchgangskanal (25) versehen ist und außerdem an einem der beiden Enden des zentralen Durchgangskanals (25) einen im wesentlichen zylindrisch geformten Kupplungssitz (27) aufweist, der so strukturiert ist, dass er vom Ende (20a) des genannten Drainagekanals (20) flüssigkeitsdicht in Eingriff gebracht werden kann; eine äußere Ringmutter (40), die axial drehbar auf dem äußeren Gehäuse (24) am Kupplungssitz (27) angebracht ist, um den Kupplungssitz (27) zu umschließen und lokal im Wesentlichen koaxial zum genannten Kupplungssitz (27) zu sein; und einen Längsstift (41), der von der Ringmutter (40) in einer exzentrischen Position und parallel zur Längsachse (D) des Kupplungssitzes (27) auskragend vorsteht und so dimensioniert ist, dass er in eine Steueröffnung oder in einen Hohlraum einsteckbar ist, die bzw. der speziell an der Stirnwand (2b) des kastenförmigen Gehäuses (2) an der Seite des Endes (20a) des genannten Drainagekanals (20) ausgebildet ist; und dass er zusätzlich eine Erfassungsvorrichtung umfasst, die geeignet ist, zu bestimmen, wann der genannte Hahn (21) am Ende (20a) des genannten Drainagekanals (20) befestigt/angebracht ist, und einen Mikroschalter oder einen anderen Positionssensor umfasst, der innerhalb der Steueröffnung oder des Steuerhohlraums angeordnet und so strukturiert ist, dass er aktiviert wird, wenn der Längsstift (41) in die genannte Steueröffnung oder den Steuerhohlraum eingreift/eindringt.

2. Mehrzweck-Chargen-Gefriermaschine nach Anspruch 1, **dadurch gekennzeichnet, dass** der Hahn (21) Folgendes umfasst: einen handbetätigten beweglichen Verschluss (26), der sich innerhalb des zentralen Durchgangskanals (25) befindet und zwischen einer geschlossenen Position, in der er den Austritt irgendeiner Flüssigkeit durch den zentralen Durchgangskanal (25) verhindert, und einer breiten Öffnungsposition beweglich ist, in der er den freien Austritt irgendeiner Flüssigkeit durch den zentralen Durchgangskanal (25) ermöglicht; und einen Bajonett-Verriegelungsmechanismus bzw. Bajonettverschluss (28), der im Inneren des Kupplungssitzes (27) angeordnet ist und so aufgebaut ist, dass er selektiv auf starre Weise das äußere Gehäuse (24) auf dem Ende (20a) des Drainagekanals (20) verriegelt.

3. Mehrzweck-Chargen-Gefriermaschine nach Anspruch 2, **dadurch gekennzeichnet, dass** der Bajonettverschluss (28) Folgendes umfasst: einen vorstehenden Stift (30), der von der Seitenwand des Endes (2a) des Drainagekanals (20) auskragend vorsteht; eine transversale Nut (31), die auf der inneren zylindrischen Oberfläche (27i) des Kupplungssitzes (27) erhalten wird, um auf einer Bezugsebene (P) lokal im Wesentlichen rechtwinklig zur Längsachse (D) des Kupplungssitzes (27) zu ruhen, und die so geformt/ausgelegt ist, dass sie gleitend vom vorstehenden Bolzen (30) in Eingriff gebracht wird; und eine Längsnut (33), die sich von der peripheren Kante des Kupplungssitzes (27) zur transversalen Nut (31) erstreckt, während sie lokal im Wesentlichen parallel zur Längsachse (D) des Kupplungssitzes (27) verläuft, und die so geformt/ausgelegt ist, dass sie gleitend vom vorstehenden Bolzen (30) in Eingriff gebracht wird.

4. Mehrzweck-Chargen-Gefriermaschine nach Anspruch 2 oder 3, **dadurch gekennzeichnet, dass** das äußere Gehäuse (24) des Hahns einen im wesentlichen zylindrischen glockenförmigen Körper (34) aufweist, der den genannten Kupplungssitz (27) in seiner eigenen Öffnung aufnimmt, sodass er fluiddicht am Ende (20a) des Drainagekanals (20) angebracht wird, während er örtlich im wesentlichen koaxial zur Längsachse (C) des Drainagekanals (20) bleibt; und eine transversale rohrförmige Hülse (35), die sich von der Seitenwand des glockenförmigen Körpers (34) nach außen erstreckt bzw. verzweigt.

5. Mehrzweck-Chargen-Gefriermaschine nach Anspruch 4, **dadurch gekennzeichnet, dass** der bewegliche Verschluss (26) des Hahns (21) einen Kolben (36) aufweist, der fluiddicht in den geradlinigen Hohlraum des glockenförmigen Körpers (34) eingesetzt ist, mit der Möglichkeit, sich im genannten geradlinigen Hohlraum parallel zur Längsachse (D) des glockenförmigen Körpers (34) zu bewegen, und eine handbetätigte Steuerstange (37), die sich parallel zur Längsachse (D) des glockenförmigen Körpers (34) erstreckt, ein Ende hat, das mit dem genannten Kolben (36) fest verbunden ist, und schließlich die Endkappe des glockenförmigen Körpers (34) durchlässig und axial gleitend in Eingriff nimmt, sodass sie auskragend aus dem glockenförmigen Körper (34) vorsteht; wobei die Steuerstange (37) manuell beweglich ist, zwischen einer eingefahrenen Position, in der die Steuerstange (37) fast vollständig im glockenförmigen Körper (34) eingeschlossen ist, sodass der Kolben (36) stromaufwärts der Öffnung der transversalen rohrförmigen Hülse (35) angeordnet ist, und einer herausgezogenen Position, in der die Steuerstange (37) fast vollständig außerhalb des glockenförmigen Körpers (34) enthalten ist, sodass der Kolben (36) stromabwärts der Öffnung der transversalen rohrförmigen Hülse (35) angeordnet ist.

6. Mehrzweck-Chargen-Gefriermaschine nach einem der vorstehenden Ansprüche, **dadurch gekennzeichnet, dass** sie auch einen oberen Deckel (6) umfasst, der so strukturiert ist, dass er die Öffnung (4a) des vertikalen Verarbeitungsbehälters (4) flüssigkeitsdicht verschließen kann, und der beweglich an der oberen Wand (2a) des kastenförmigen Gehäuses (2) angebracht ist, sodass er manuell in einer geschlossenen Position positionierbar ist, in der der genannte Deckel (6) die Öffnung (4a) des vertikalen Verarbeitungstanks (4) schließt/abdeckt.

7. Mehrzweck-Chargen-Gefriermaschine nach irgendeinem der vorstehenden Ansprüche, **dadurch gekennzeichnet, dass** sie auch eine Frontklappe (7) umfasst, die so strukturiert ist, dass sie die Öffnung (5a) des horizontalen Verarbeitungstanks (5) flüssigkeitsdicht verschließen kann, und die beweglich an der Stirnwand (2b) des kastenförmigen Gehäuses (2) angebracht ist, sodass sie manuell in einer geschlossenen Position positionierbar ist, in der die genannte Klappe (7) die Öffnung (5a) des horizontalen Verarbeitungstanks (5) flüssigkeitsdicht verschließt.

8. Mehrzweck-Chargen-Gefriermaschine nach irgendeinem der vorstehenden Ansprüche, **dadurch gekennzeichnet, dass** sie auch eine Heizeinrichtung (12) umfasst, die so strukturiert ist, dass sie den vertikalen Verarbeitungsbehälter (4) und seinen Inhalt auf eine Temperatur von über +50°C bringt und dort hält; und einen oberen Kühlkreislauf (13), der so strukturiert ist, dass er den vertikalen Verarbeitungsbehälter (4) und seinen Inhalt auf eine Temperatur von unter +10°C bringt und dort hält.

9. Mehrzweck-Chargen-Gefriermaschine nach irgendeinem der vorstehenden Ansprüche, **dadurch gekennzeichnet, dass** sie auch einen unteren Kühlkreislauf umfasst, der so strukturiert ist, dass er den horizontalen Verarbeitungstank (5) und seinen Inhalt auf eine Chargentemperatur von unter +0°C bringt und dort hält.

10. Mehrzweck-Chargen-Gefriermaschine für die Zubereitung von Speiseeis, Konditoreicremes und dergleichen, die mit einer äußeren kastenförmigen Hülle (2) versehen ist und auch Folgendes umfasst:
- einen vertikalen Verarbeitungsbehälter (4), der im Wesentlichen zylindrisch geformt ist und sich innerhalb des kastenförmigen Gehäuses (2) erstreckt, ausgehend von der oberen Wand (2a) des Gehäuses;
- einen horizontalen, im Wesentlichen zylindrischen Verarbeitungsbehälter (5), der sich innerhalb des kastenförmigen Gehäuses (2) erstreckt, ausgehend von der Stirnwand (2b) des Gehäuses;
- einen Drainagekanal (20), der vom vertikalen Verarbeitungsbehälter (4) bis zur Stirnwand (2b) des kastenförmigen Gehäuses (2) abzweigt, und der dann auskragend mit dem Ende (20a) von der Stirnwand (2b) in etwa oberhalb der Öffnung (5a) des horizontalen Verarbeitungsbehälters (5) hinausragt; und
- einen handbetätigter Hahn (21), der am genannten Ende (20a) des Drainagekanals (20) befestigt ist, sodass er von der Stirnwand (2b) des kastenförmigen Gehäuses (2) auskragend vorsteht;
wobei die Mehrzweck-Chargen-Gefriermaschine **dadurch gekennzeichnet ist, dass** das Ende (20a) des Drainagekanals (20) eine im Wesentlichen zylindrische Rohrform aufweist, und dass der handbetätigte Hahn (21) so strukturiert ist, dass er am genannten Ende (20a) des Drainagekanals (20) in einer starren und stabilen, wenn auch leicht entfernbaren Weise mittels eines Bajonettverschlussmechanismus angebracht und dann verriegelt wird; dass der Hahn (21) Folgendes umfasst: ein äußeres Gehäuse (24), das mit einem zentralen Durchgangskanal (25) versehen ist und außerdem an einem der beiden Enden des genannten zentralen Durchgangskanals (25) einen im wesentlichen zylindrisch geformten Kupplungssitz (27) aufweist, der so strukturiert ist, dass er vom Ende (20a) des Drainagekanals (20) flüssigkeitsdicht in Eingriff gebracht wird; und eine Reihe von Permanentmagneten, die entsprechend auf dem Außengehäuse (24) um den Kupplungssitz (27) herum verteilt sind; und dass er zusätzlich eine Erfassungsvorrichtung umfasst, die so strukturiert ist, dass sie feststellen kann, wann der genannte Hahn (21) am Ende (20a) des genannten Drainagekanals (20) befestigt/angebracht ist, und die einen oder mehrere Anwesenheitssensoren umfasst, die an der Stirnwand (2b) des kastenförmigen Gehäuses (2) so angeordnet sind, dass sie das Ende (20a) des genannten Drainagekanals (20) flankieren, und die so strukturiert sind, dass sie aktiviert werden, wenn sie durch das Magnetfeld aktiviert werden, das von den Permanentmagneten erzeugt wird, die sich auf dem äußeren Gehäuse (24) des Hahns (21) befinden.

11. Mehrzweck-Chargen-Gefriermaschine nach Anspruch 10, **dadurch gekennzeichnet, dass** der Hahn (21) Folgendes umfasst: einen handbetätigten beweglichen Schieber (26), der sich innerhalb des zentralen Durchgangskanals (25) befindet und zwischen einer geschlossenen Position, in der er den Austritt irgendeiner Flüssigkeit durch den zentralen Durchgangskanal (25) verhindert, und einer breiten Öffnungsstellung beweglich ist, in der er den freien Austritt irgendeiner Flüssigkeit durch den zentralen Durchgangskanal (25) ermöglicht; und einen Bajonett-Verriegelungsmechanismus (28), der innerhalb des Kupplungssitzes (27) angeordnet ist und so strukturiert ist, dass er das äußere Gehäuse (24) des Hahns (21) am Ende (20a) des Drainagekanals (20) selektiv starr verriegelt.

12. Mehrzweck-Chargen-Gefriermaschine nach Anspruch 11, **dadurch gekennzeichnet, dass** der Bajonett-Verriegelungsmechanismus (28) Folgendes umfasst: einen vorstehenden Stift (30), der aus der Seitenwand des Endes (2a) des Drainagekanals (20) auskragend vorsteht; eine transversale Nut (31), die auf der inneren zylindrischen Oberfläche (27i) des Kupplungssitzes (27) erhalten wird, um auf einer Bezugsebene (P) lokal im Wesentlichen rechtwinklig zur Längsachse (D) des Kupplungssitzes (27) zu ruhen, und die so geformt/ausgelegt ist, dass sie gleitend durch den vorstehenden Bolzen (30) in Eingriff gebracht wird; und eine Längsnut (33), die sich von der peripheren Kante des Kupplungssitzes (27) zu der transversalen Nut (31) erstreckt, während sie lokal im Wesentlichen parallel zur Längsachse (D) des Kupplungssitzes (27) bleibt, und die so geformt/ausgelegt ist, dass sie gleitend durch den vorstehenden Bolzen (30) in Eingriff gebracht wird.

13. Mehrzweck-Chargen-Gefriermaschine nach Anspruch 11 oder 12, **dadurch gekennzeichnet, dass** das äußere Gehäuse (24) des Hahns einen im Wesentlichen zylindrischen Körper (34) aufweist, der den genannten Kupplungssitz (27) in seiner eigenen Öffnung enthält, sodass er flüssigkeitsdicht am Ende (20a) des Drainagekanals (20) angebracht wird, während er lokal im Wesentlichen koaxial zur Längsachse (C) des Drainagekanals (20) bleibt; und eine transversale rohrförmige Hülse (35), die sich von der Seitenwand des glockenförmigen Körpers (34) nach außen erstreckt bzw. verzweigt.

14. Mehrzweck-Chargen-Gefriermaschine nach Anspruch 13, **dadurch gekennzeichnet, dass** der bewegliche Verschluss (26) des Hahns (21) einen Kolben (36), der fluiddicht in den geradlinigen Hohlraum des glockenförmigen Körpers (34) eingesetzt ist, mit der Möglichkeit, sich im genannten geradlinigen Hohlraum parallel zur Längsachse (D) des glockenförmigen Körpers (34) zu bewegen,
und eine handbetätigte Steuerstange (37), die sich parallel zur Längsachse (D) des glockenförmigen Körpers (34) erstreckt, ein Ende hat, das mit dem genannten Kolben (36) fest verbunden ist, und schließlich die Endkappe des glockenförmigen Körpers (34) durchlässig und axial gleitend in Eingriff nimmt, sodass sie auskragend aus dem glockenförmigen Körper (34) vorsteht; wobei die Steuerstange (37) zwischen einer eingefahrenen Position, in der die Steuerstange (37) fast vollständig im glockenförmigen Körper (34) eingeschlossen ist, sodass der Kolben (36) stromaufwärts der Öffnung der transversalen rohrförmigen Hülse (35) angeordnet ist, und einer herausgezogenen Position manuell beweglich ist, in der die Steuerstange (37) fast vollständig außerhalb des glockenförmigen Körpers (34) enthalten ist, sodass der Kolben (36) stromabwärts der Öffnung der transversalen rohrförmigen Hülse (35) angeordnet ist.

15. Mehrzweck-Chargen-Gefriermaschine nach irgendeinem der Ansprüche 10 bis 14, **dadurch gekennzeichnet, dass** der Hahn (21) auch eine äußere Ringmutter (40) aufweist, die axial drehbar am äußeren Gehäuse (24), am Kupplungssitz (27) angebracht ist, sodass sie den Kupplungssitz (27) umschließt und lokal im Wesentlichen koaxial zum genannten Kupplungssitz (27) ist; und einen Längsstift (41), der von der Ringmutter (40) in einer exzentrischen Position und parallel zur Längsachse (D) des Kupplungssitzes (27) auskragend vorsteht.

16. Mehrzweck-Chargen-Gefriermaschine nach Anspruch 15, **dadurch gekennzeichnet, dass** der Längsstift (41) so bemessen ist, dass er in eine Steueröffnung oder einen Hohlraum einsetzbar ist, die bzw. der speziell an der Stirnwand (2b) des kastenförmigen Gehäuses (2) an der Seite des Endes (20a) des genannten Drainagekanals (20) ausgebildet ist.

17. Mehrzweck-Chargen-Gefriermaschine nach irgendeinem der Ansprüche 10 bis 16, **dadurch gekennzeichnet, dass** sie auch einen oberen Deckel (6) umfasst, der so strukturiert ist, dass er die Öffnung (4a) des vertikalen Verarbeitungstanks (4) flüssigkeitsdicht verschließen kann, und der beweglich an der oberen Wand (2a) des kastenförmigen Gehäuses (2) angebracht ist, so dass er manuell in einer geschlossenen Position positionierbar ist, in der der genannte Deckel (6) die Öffnung (4a) des vertikalen Verarbeitungstanks (4) schließt/abdeckt.

18. Mehrzweck-Chargen-Gefriermaschine nach irgendeinem der Ansprüche10 bis 17, **dadurch gekennzeichnet, dass** sie auch eine Frontklappe (7) umfasst, die so strukturiert ist, dass sie die Öffnung (5a) des horizontalen Verarbeitungstanks (5) flüssigkeitsdicht verschließen kann, und die beweglich an der Stirnwand (2b) des kastenförmigen Gehäuses (2) angebracht ist, so dass sie manuell in einer geschlossenen Position positioniert werden kann, in der die genannte Klappe (7) die Öffnung (5a) des horizontalen Verarbeitungstanks (5) flüssigkeitsdicht verschließt.

19. Mehrzweck-Chargen-Gefriermaschine nach irgendeinem der Ansprüche 10 bis 18, **dadurch gekennzeichnet, dass** sie auch eine Heizeinrichtung (12) umfasst, die so strukturiert ist, dass sie den vertikalen Verarbeitungsbehälter (4) und seinen Inhalt auf eine Temperatur von über +50°C bringt und dort hält; und einen oberen Kühlkreislauf (13), der so aufgebaut ist, dass er den vertikalen Verarbeitungsbehälter (4) und seinen Inhalt auf eine Temperatur von unter +10°C bringt und dort hält.

20. Mehrzweck-Chargen-Gefriermaschine nach irgendeinem der Ansprüche 10 bis 19, **dadurch gekennzeichnet, dass** sie auch einen unteren Kühlkreislauf umfasst, der so strukturiert ist, dass er den horizontalen Verarbeitungsbehälter (5) und seinen Inhalt auf eine Chargentemperatur von unter +0°C bringt und dort hält.

## Revendications

1. Machine congélateur discontinue polyvalente pour la préparation de crèmes glacées, de crèmes de confiserie et similaires pourvue d'un boîtier de type coffre externe (2) et comprenant également :
- un bac de traitement vertical (4) qui est de forme sensiblement cylindrique et s'étend à l'intérieur du boîtier de type coffre (2), en commençant par la paroi supérieure (2a) du boîtier ;
- un bac de traitement horizontal (5) qui est de forme sensiblement cylindrique et s'étend à l'intérieur du boîtier de type coffre (2), en commençant par la paroi avant (2b) du boîtier ;
- un conduit de purge (20) qui bifurque depuis le bac de traitement vertical (4) jusqu'à atteindre la paroi avant (2b) du boîtier de type coffre (2) puis dépasse en porte-à-faux avec l'extrémité (20a) depuis la paroi avant (2b), approximativement au-dessus de l'ouverture (5a) du bac de traitement horizontal (5) ; et
- une chantepleure à commande manuelle (21) qui est fixée à ladite extrémité (20a) du conduit de purge (20), de façon à dépasser en porte-à-faux depuis la paroi avant (2b) du boîtier de type coffre (2) ;
la machine congélateur discontinue polyvalente étant **caractérisée en ce que** l'extrémité (20a) du conduit de purge (20) a une forme tubulaire sensiblement cylindrique, et la chantepleure à commande manuelle (21) est structurée de façon à être ajustée puis verrouillée sur ladite extrémité (20a) du conduit de purge (20) de manière rigide et stable, bien que facilement amovible, au moyen d'un mécanisme de verrouillage à baïonnette ; **en ce que** la chantepleure (21) comprend : un boîtier externe (24) qui est pourvu d'un conduit traversant central (25) et de plus comporte, à l'une des deux extrémités dudit conduit traversant central (25), une assise de couplage de forme sensiblement cylindrique (27) qui est structurée de façon à être engagée de manière étanche aux fluides par l'extrémité (20a) dudit conduit de purge (20) ; un écrou à oeil externe (40) qui est ajusté de manière axialement rotative sur le boîtier externe (24), au niveau de l'assise de couplage (27), de façon à enserrer et à être localement sensiblement coaxial avec ladite assise de couplage (27) ; et une cheville longitudinale (41) qui dépasse en porte-à-faux depuis l'écrou à oeil (40) dans une position excentrique et parallèle à l'axe longitudinal (D) de l'assise de couplage (27), et est dimensionnée pour pouvoir être insérée dans une ouverture ou cavité de commande spécialement obtenue sur la paroi avant (2b) du boîtier de type coffre (2), au niveau du côté de l'extrémité (20a) dudit conduit de purge (20) ; ; et **en ce qu'**il comprend en outre un dispositif de détection qui est adapté pour déterminer quand ladite chantepleure (21) est fixée/ajustée à l'extrémité (20a) dudit conduit de purge (20), et comprend un microcommutateur ou un autre capteur de position qui est agencé au sein de l'ouverture ou cavité de commande et est structuré de façon à s'activer lorsque la cheville longitudinale (41) s'engage/pénètre à l'intérieur de ladite ouverture ou cavité de commande.

2. Machine congélateur discontinue polyvalente selon la revendication 1, **caractérisée en ce que** la chantepleure (21) comprend : un obturateur mobile à commande manuelle (26) qui est situé à l'intérieur du conduit traversant central (25) et peut être déplacé entre une position fermée dans laquelle il empêche le reflux de tout liquide à travers le conduit traversant central (25), et une position d'ouverture large dans laquelle il permet un reflux libre de tout liquide à travers le conduit traversant central (25) ; et un mécanisme de verrouillage à baïonnette (28) qui est agencé à l'intérieur de l'assise de couplage (27), et est structuré pour verrouiller sélectivement de manière rigide le boîtier externe (24) sur l'extrémité (20a) du conduit de purge (20).

3. Machine congélateur discontinue polyvalente selon la revendication 2, **caractérisée en ce que** le mécanisme de verrouillage à baïonnette (28) comprend : une cheville de dépassement (30) qui dépasse en porte-à-faux depuis la paroi latérale de l'extrémité (2a) du conduit de purge (20) ; une rainure transversale (31) qui est obtenue sur la surface cylindrique interne (27i) de l'assise de couplage (27), de façon à reposer sur un plan de référence (P) localement sensiblement orthogonal à l'axe longitudinal (D) de l'assise de couplage (27), et est conformée/dimensionnée de façon à être engagée en coulissement par la cheville de dépassement (30) ; et une rainure longitudinale (33) qui s'étend depuis le bord périphérique de l'assise de couplage (27) vers la rainure transversale (31) tout en restant localement sensiblement parallèle à l'axe longitudinal (D) de l'assise de couplage (27), et est conformée/dimensionnée de façon à être engagée en coulissement par la cheville de dépassement (30).

4. Machine congélateur discontinue polyvalente selon la revendication 2 ou 3, **caractérisée en ce que** le boîtier externe (24) de la chantepleure comprend un corps en forme de cloche sensiblement cylindrique (34) qui incorpore ladite assise de couplage (27) au niveau de sa propre ouverture, de façon à être ajusté de manière étanche aux fluides sur l'extrémité (20a) du conduit de purge (20) tout en restant localement sensiblement coaxial à l'axe longitudinal (C) du conduit de purge (20) ; et un manchon tubulaire transversal (35) qui s'étend/bifurque vers l'extérieur depuis la paroi latérale du corps en forme de cloche (34).

5. Machine congélateur discontinue polyvalente selon la revendication 4, **caractérisée en ce que** l'obturateur déplaçable (26) de la chantepleure (21) comprend un piston (36) inséré de manière étanche aux fluides à l'intérieur de la cavité rectiligne du corps en forme de cloche (34) avec la possibilité de se déplacer à l'intérieur de ladite cavité rectiligne parallèle à l'axe longitudinal (D) du corps en forme de cloche (34), et une tige de commande à commande manuelle (37) qui s'étend parallèle à l'axe longitudinal (D) du corps en forme de cloche (34), a une extrémité solidaire dudit piston (36), et enfin s'engage de manière traversante et axialement coulissante dans le capuchon du corps en forme de cloche (34), de façon à dépasser en porte-à-faux à l'extérieur du corps en forme de cloche (34) ; la tige de commande (37) pouvant être manuellement déplacée entre une position rétractée dans laquelle la tige de commande (37) est presque entièrement enserrée à l'intérieur du corps en forme de cloche (34), de façon à agencer le piston (36) en amont de l'ouverture du manchon tubulaire transversal (35), et une position extraite dans laquelle la tige de commande (37) est presque entièrement contenue à l'extérieur du corps en forme de cloche (34), de façon à agencer le piston (36) en aval de l'ouverture du manchon tubulaire transversal (35).

6. Machine congélateur discontinue polyvalente selon l'une quelconque des revendications précédentes, **caractérisée en ce qu'**elle comprend également un couvercle supérieur (6) qui est structuré de façon à pouvoir fermer l'ouverture (4a) du bac de traitement vertical (4) de manière étanche aux fluides, et est monté de manière mobile sur la paroi supérieure (2a) du boîtier de type coffre (2) de façon à pouvoir être positionné manuellement dans une position fermée dans laquelle ledit couvercle (6) ferme/couvre l'ouverture (4a) du bac de traitement vertical (4).

7. Machine congélateur discontinue polyvalente selon l'une quelconque des revendications précédentes, **caractérisée en ce qu'**elle comprend également une trappe avant (7) qui est structurée de façon à être apte à fermer l'ouverture (5a) du bac de traitement horizontal (5) de manière étanche aux fluides, et est montée de manière déplaçable sur la paroi avant (2b) du boîtier de type coffre (2) de façon à pouvoir être positionnée manuellement dans une position fermée dans laquelle ladite trappe (7) ferme l'ouverture (5a) du bac de traitement horizontal (5) de manière étanche aux fluides.

8. Machine congélateur discontinue polyvalente selon l'une quelconque des revendications précédentes, **caractérisée en ce qu'**elle comprend également un dispositif de chauffage (12) structuré de façon à amener et maintenir le bac de traitement vertical (4) et son contenu à une température au-dessus de +50 °C ; et un circuit de refroidissement supérieur (13) qui est structuré de façon à amener et maintenir le bac de traitement vertical (4) et son contenu à une température en dessous de +10 °C.

9. Machine congélateur discontinue polyvalente selon l'une quelconque des revendications précédentes, **caractérisée en ce qu'**elle comprend également un circuit de refroidissement inférieur structuré de façon à amener et maintenir le bac de traitement horizontal (5) et son contenu à une température de lot en dessous de +0 °C.

10. Machine congélateur discontinue polyvalente pour la préparation de crèmes glacées, de crèmes de confiserie et similaires pourvue d'un boîtier de type coffre externe (2) et comprenant également :
- un bac de traitement vertical (4) qui est de forme sensiblement cylindrique et s'étend à l'intérieur du boîtier de type coffre (2), en commençant par la paroi supérieure (2a) du boîtier ;
- un bac de traitement horizontal (5) qui est de forme sensiblement cylindrique et s'étend à l'intérieur du boîtier de type coffre (2), en commençant par la paroi avant (2b) du boîtier ;
- un conduit de purge (20) qui bifurque depuis le bac de traitement vertical (4) jusqu'à atteindre la paroi avant (2b) du boîtier de type coffre (2) puis dépasse en porte-à-faux avec l'extrémité (20a) depuis la paroi avant (2b), approximativement au-dessus de l'ouverture (5a) du bac de traitement horizontal (5) ; et
- une chantepleure à commande manuelle (21) qui est fixée à ladite extrémité (20a) du conduit de purge (20), de façon à dépasser en porte-à-faux depuis la paroi avant (2b) du boîtier de type coffre (2) ;
la machine congélateur discontinue polyvalente étant **caractérisée en ce que** l'extrémité (20a) du conduit de purge (20) a une forme tubulaire sensiblement cylindrique, et la chantepleure à commande manuelle (21) est structurée de façon à être ajustée puis verrouillée sur ladite extrémité (20a) du conduit de purge (20) de manière rigide et stable, bien que facilement amovible, au moyen d'un mécanisme de verrouillage à baïonnette ; **en ce que** la chantepleure (21) comprend : un boîtier externe (24) qui est pourvu d'un conduit traversant central (25) et de plus comporte, à l'une des deux extrémités dudit conduit traversant central (25), une assise de couplage de forme sensiblement cylindrique (27) qui est structurée de façon à être engagée de manière étanche aux fluides par l'extrémité (20a) dudit conduit de purge (20) ; et une série d'aimants permanents adéquatement répartis sur le boîtier externe (24), autour de l'assise de couplage (27) ; et **en ce qu'**elle comprend de surcroît un dispositif de détection qui est structuré pour être apte à déterminer quand ladite chantepleure (21) est fixée/ajustée à l'extrémité (20a) dudit conduit de purge (20), et qui inclut un ou plusieurs capteurs de présence qui sont agencés sur la paroi avant (2b) du boîtier de type coffre (2) de façon à contourner le flanc de l'extrémité (20a) dudit conduit de purge (20), et sont structurés de façon à être activés lorsqu'ils sont investis par le champ magnétique généré par les aimants permanents situés sur le boîtier externe (24) de la chantepleure (21).

11. Machine congélateur discontinue polyvalente selon la revendication 10, **caractérisée en ce que** la chantepleure (21) comprend : un obturateur mobile à commande manuelle (26) qui est situé à l'intérieur du conduit traversant central (25) et peut être déplacé entre une position fermée dans laquelle il empêche le reflux de tout liquide à travers le conduit traversant central (25), et une position d'ouverture large dans laquelle il permet un reflux libre de tout liquide à travers le conduit traversant central (25) ; et un mécanisme de verrouillage à baïonnette (28) qui est agencé à l'intérieur de l'assise de couplage (27), et est structuré pour verrouiller sélectivement de manière rigide le boîtier externe (24) de la chantepleure (21) sur l'extrémité (20a) du conduit de purge (20).

12. Machine congélateur discontinue polyvalente selon la revendication 11, **caractérisée en ce que** le mécanisme de verrouillage à baïonnette (28) comprend : une cheville de dépassement (30) qui dépasse en porte-à-faux depuis la paroi latérale de l'extrémité (2a) du conduit de purge (20) ; une rainure transversale (31) qui est obtenue sur la surface cylindrique interne (27i) de l'assise de couplage (27), de façon à reposer sur un plan de référence (P) localement sensiblement orthogonal à l'axe longitudinal (D) de l'assise de couplage (27), et est conformée/dimensionnée de façon à être engagée en coulissement par la cheville de dépassement (30) ; et une rainure longitudinale (33) qui s'étend depuis le bord périphérique de l'assise de couplage (27) vers la rainure transversale (31) tout en restant localement sensiblement parallèle à l'axe longitudinal (D) de l'assise de couplage (27), et est conformée/dimensionnée de façon à être engagée en coulissement par la cheville de dépassement (30).

13. Machine congélateur discontinue polyvalente selon la revendication 11 ou 12, **caractérisée en ce que** le boîtier externe (24) de la chantepleure comprend un corps en forme de cloche sensiblement cylindrique (34) qui incorpore ladite assise de couplage (27) au niveau de sa propre ouverture, de façon à être ajusté de manière étanche aux fluides sur l'extrémité (20a) du conduit de purge (20) tout en restant localement sensiblement coaxial à l'axe longitudinal (C) du conduit de purge (20) ; et un manchon tubulaire transversal (35) qui s'étend/bifurque vers l'extérieur depuis la paroi latérale du corps en forme de cloche (34).

14. Machine congélateur discontinue polyvalente selon la revendication 13, **caractérisée en ce que** l'obturateur déplaçable (26) de la chantepleure (21) comprend un piston (36) inséré de manière étanche aux fluides à l'intérieur de la cavité rectiligne du corps en forme de cloche (34) avec la possibilité de se déplacer à l'intérieur de ladite cavité rectiligne parallèle à l'axe longitudinal (D) du corps en forme de cloche (34), et une tige de commande à commande manuelle (37) qui s'étend parallèle à l'axe longitudinal (D) du corps en forme de cloche (34), a une extrémité solidaire dudit piston (36), et enfin s'engage de manière traversante et axialement coulissante dans le capuchon du corps en forme de cloche (34), de façon à dépasser en porte-à-faux à l'extérieur du corps en forme de cloche (34) ; la tige de commande (37) pouvant être manuellement déplacée entre une position rétractée dans laquelle la tige de commande (37) est presque entièrement enserrée à l'intérieur du corps en forme de cloche (34), de façon à agencer le piston (36) en amont de l'ouverture du manchon tubulaire transversal (35), et une position extraite dans laquelle la tige de commande (37) est presque entièrement contenue à l'extérieur du corps en forme de cloche (34), de façon à agencer le piston (36) en aval de l'ouverture du manchon tubulaire transversal (35).

15. Machine congélateur discontinue polyvalente selon l'une quelconque des revendications 10 à 14, **caractérisée en ce que** la chantepleure (21) comprend également un écrou à oeil externe (40) qui est ajusté de manière axialement rotative sur le boîtier externe (24), au niveau de l'assise de couplage (27), de façon à enserrer et à être localement sensiblement coaxial avec ladite assise de couplage (27) ; et une cheville longitudinale (41) qui dépasse en porte-à-faux depuis l'écrou à oeil (40) dans une position excentrique et parallèle à l'axe longitudinal (D) de l'assise de couplage (27).

16. Machine congélateur discontinue polyvalente selon la revendication 15, **caractérisée en ce que** ladite cheville longitudinale (41) est dimensionnée de façon à pouvoir être insérée dans une ouverture ou cavité de commande spécifiquement obtenue sur la paroi avant (2b) du boîtier de type coffre (2), au niveau du côté de l'extrémité (20a) dudit conduit de purge (20).

17. Machine congélateur discontinue polyvalente selon l'une quelconque des revendications 10 à 16, **caractérisée en ce qu'**elle comprend également un couvercle supérieur (6) qui est structuré de façon à pouvoir fermer l'ouverture (4a) du bac de traitement vertical (4) de manière étanche aux fluides, et est monté de manière mobile sur la paroi supérieure (2a) du boîtier de type coffre (2) de façon à pouvoir être positionné manuellement dans une position fermée dans laquelle ledit couvercle (6) ferme/couvre l'ouverture (4a) du bac de traitement vertical (4).

18. Machine congélateur discontinue polyvalente selon l'une quelconque des revendications 10 à 17, **caractérisée en ce qu'**elle comprend également une trappe avant (7) qui est structurée de façon à être apte à fermer l'ouverture (5a) du bac de traitement horizontal (5) de manière étanche aux fluides, et est montée de manière déplaçable sur la paroi avant (2b) du boîtier de type coffre (2) de façon à pouvoir être positionnée manuellement dans une position fermée dans laquelle ladite trappe (7) ferme l'ouverture (5a) du bac de traitement horizontal (5) de manière étanche aux fluides.

19. Machine congélateur discontinue polyvalente selon l'une quelconque des revendications 10 à 18, **caractérisé en ce qu'**elle comprend également un dispositif de chauffage (12) structuré de façon à amener et maintenir le bac de traitement vertical (4) et son contenu à une température au-dessus de +50 °C ; et un circuit de refroidissement supérieur (13) qui est structuré de façon à amener et maintenir le bac de traitement vertical (4) et son contenu à une température en dessous de +10 °C.

20. Machine congélateur discontinue polyvalente selon l'une quelconque des revendications 10 à 19, **caractérisée en ce qu'**elle comprend en outre un circuit de refroidissement inférieur structuré de façon à amener et maintenir le bac de traitement horizontal (5) et son contenu à une température de lot en dessous de +0 °C.
